# FASCICULE DE BREVET EUROPEEN

(11) **EP 4 362 658 B1**
(45) Date de publication et mention de la délivrance du brevet: **02.04.2025**
(21) Numéro de dépôt: 22736296.9
(22) Date de dépôt: 06.07.2022
(51) Int. Cl.: A01F 25/14

(54) **SILO MOBILE AGRICOLE TÉLESCOPIQUE**
FAHRBARERES LANDWIRTSCHAFTLICHES TELESKOPSILO
MOBILE AGRICULTURAL TELESCOPIC SILO

(30) Priorité: 22.07.2021 FR 2107968
(43) Date de publication de la demande: 08.05.2024
(73) Titulaire: SAS Paradis, 64420 Lucgarier (FR)
(72) Inventeur: PARADIS HIARE, Philippe, 64420 Lucgarier (FR)
(74) Mandataire: A.P.I. Conseil
(86) Numéro de dépôt international: PCT/EP2022/068811
(87) Numéro de publication internationale: WO 2023/001560

(56) Documents cités:
- CN-A- 111 887 039
- CN-B- 104 170 602
- CN-U- 207 135 568
- CN-U- 209 527 224
- CN-U- 212 381 717
- US-A1- 2016 251 152

## Description

### Domaine technique

L'invention concerne le domaine des véhicules agricoles. En particulier, elle concerne un silo mobile agricole. Des systèmes similaires sont connu dans les documents CN209527224U et CN212381717.

### Technique antérieure

Les organismes collecteurs, tels que les coopératives, cherchent à répondre aux contraintes de leurs producteurs agricoles, notamment en leur proposant des innovations technologiques qui permettent de simplifier et d'optimiser la logistique au moment des récoltes.

En effet, les conditions météorologiques, réglementaires et économiques amènent les organismes collecteurs à repenser leur système d'organisation des collectes de produits agricoles, tels que les céréales. Et ce, afin d'apporter des solutions personnalisées à moindres coûts pour augmenter leur productivité tout en limitant leurs coûts de fonctionnement.

Or, ces derniers rencontrent un problème de structure qui est lié à la pluralité des sites de collecte qui sont répartis sur un territoire à couvrir et au vieillissement de leurs infrastructures.

En effet, sur certains territoires, les organismes collecteurs possèdent des silos dans tout ou partie des communes avoisinantes afin d'être au plus proche de leurs producteurs agricoles.

Cette organisation nécessite de se déplacer auprès de chacun des silos pour recueillir les récoltes stockées dans les silos. Ceci implique des coûts opérationnels élevés en matière d'équipements et de personnel qui sont proportionnels au nombre de sites.

Afin de réduire ces coûts opérationnels, de nombreux organismes collecteurs ferment régulièrement des sites de collecte bien souvent vétustes et ne répondant plus aux normes de sécurité.

Mais ces fermetures successives de sites de proximité posent des problèmes de satisfaction pour les producteurs agricoles. Les organismes collecteurs ont besoin de trouver des solutions alternatives afin de fidéliser leurs producteurs agricoles et leur apporter un service de proximité.

Ainsi, il existe un besoin pour recueillir des produits agricoles de manière flexible, et ce, à des coûts compétitifs.

### Résumé de l'invention

L'invention vise à résoudre, au moins partiellement, ce besoin.

L'invention vise un silo mobile agricole qui comprend :
- un châssis qui s'étend longitudinalement vers l'avant et vers l'arrière,
- un conteneur de stockage qui est monté sur le châssis entre l'avant et l'arrière du châssis et qui comprend une partie supérieure, une partie inférieure qui délimitent une cavité interne creuse, la cavité interne étant configurée pour stocker des produits agricoles sous forme de graines, et
- un dispositif de levage dont une première extrémité fixe est solidaire de la partie inférieure du conteneur de stockage et une deuxième extrémité mobile est solidaire de la partie supérieure du conteneur de stockage,
   dans lequel,
- la partie supérieure du conteneur de stockage comprend un toit et une partie télescopique qui est surmontée par le toit, la partie télescopique présentant une périphérie extérieure qui est adaptée pour être logée dans la cavité interne, et
- le dispositif de levage est configuré pour déplacer verticalement la partie supérieure du conteneur de stockage entre une configuration rétractée et une configuration déployée, la configuration rétractée autorisant toute la partie télescopique à être logée dans la cavité interne, la configuration déployée autorisant tout ou partie de la partie télescopique à s'étendre hors de la cavité interne.

Dans un premier mode de réalisation, la partie télescopique comprend au moins deux étages télescopiques qui sont déplaçables verticalement.

Par ailleurs, un premier étage télescopique, dit étage télescopique de sommet est solidaire du toit, et un deuxième étage télescopique, dit étage télescopique de base est agencé de façon mobile par rapport à la partie inférieure du conteneur de stockage.

En outre, au moins deux étages télescopiques voisins l'un de l'autre sont agencés de façon mobile l'un par rapport à l'autre.

Dans un exemple du premier mode de réalisation, l'étage télescopique de sommet présente un épaulement extérieur, l'étage télescopique de base et tout étage télescopique agencé entre l'étage télescopique de sommet et l'étage télescopique de base présentent un épaulement extérieur et un épaulement intérieur, et la partie inférieure présente un épaulement intérieur.

En outre, chaque épaulement intérieur est configuré pour pouvoir venir en butée avec l'épaulement extérieur voisin.

Dans un deuxième mode de réalisation, la partie télescopique du conteneur de stockage présente au moins une ouverture de collecte pour permettre l'introduction des produits agricoles dans la cavité interne et au moins une ouverture d'extraction pour permettre l'extraction des produits agricoles hors de la cavité interne, l'ouverture de collecte et l'ouverture d'extraction étant disposées sur des parois latérales opposées du conteneur de stockage, de préférence à l'avant et à l'arrière.

Dans un troisième mode de réalisation, le dispositif de levage comprend au moins une première paire opposée d'une première partie de dispositif de levage qui est disposée à l'extérieur du conteneur de stockage, chaque première partie de dispositif de levage comprenant au moins deux montants verticaux fixes, un cadre télescopique et un mécanisme principal de levage, les montants verticaux étant espacés transversalement l'un de l'autre, le cadre télescopique présentant une section transversale en forme de U ou de C qui est définie par deux branches et une partie centrale, les branches étant configurées pour coulisser à l'intérieur des montants verticaux, et le mécanisme principal de levage étant disposé entre la partie centrale du cadre télescopique et les montants verticaux de manière à pouvoir déplacer verticalement la partie centrale du cadre télescopique.

Dans un premier exemple du troisième mode de réalisation, le dispositif de levage comprend au moins une deuxième paire opposée d'une deuxième partie de dispositif de levage qui est disposée à l'intérieur du conteneur de stockage, chaque deuxième partie de dispositif de levage comprenant un mécanisme auxiliaire de levage qui est couplé au mécanisme principal de levage et qui est configuré pour assister, de manière synchronisée, le mécanisme principal de levage dans le maintien de la partie centrale du cadre télescopique.

Dans un deuxième exemple du troisième mode de réalisation, au moins l'un des mécanismes principaux de levage et/ou au moins l'un des mécanismes auxiliaires de levage comprend un premier groupe de vérins de levage et au moins un deuxième groupe de vérins de levage, chaque groupe de vérins de levage comprenant au moins un vérin de levage, le premier groupe de vérins de levage et le deuxième groupe de vérins de levage étant configurés pour agir en sens inverse l'un par rapport à l'autre.

Dans un mode de réalisation particulier du premier exemple et du deuxième exemple du troisième mode de réalisation, au moins l'un des mécanismes principaux de levage et/ou au moins l'un des mécanismes auxiliaires de levage comprennent un mécanisme de maintien à cliquets.

Dans un troisième exemple du troisième mode de réalisation, le toit comprend un rebord périphérique dont au moins une partie est intégrale avec la partie centrale du cadre télescopique ou est solidaire de la partie centrale du cadre télescopique.

Dans un quatrième mode de réalisation, le châssis comprend au moins un essieu avant et au moins un essieu arrière, chaque essieu supportant une pluralité de roues et dans lequel au moins l'un des essieux avant est un essieu directeur, et au moins l'un des essieux arrière est un essieu autovireur.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un mode de réalisation d'un silo mobile agricole selon l'invention.
[Fig. 2] La figure 2 représente une vue en coupe du conteneur de stockage, en configuration déployée.
[Fig. 3] La figure 3 représente une vue en coupe du conteneur de stockage, en configuration rétractée.
[Fig. 4] La figure 4 représente un mode de réalisation d'un mécanisme de levage selon l'invention.

Les figures ne respectent pas nécessairement les échelles, notamment en épaisseur, et ce à des fins d'illustration.

Sur les différentes figures, les traits et flèches en pointillés indiquent des éléments facultatifs ou optionnels.

### Description des modes de réalisation

L'un des objectifs de cette invention est de fournir une solution pour recueillir des produits agricoles de manière flexible, et ce à des coûts opérationnels compétitifs.

Pour cela, l'inventeur propose un silo qui pourra être positionné au plus près des récoltes tout en disposant d'une grande capacité de stockage, notamment, grâce à l'utilisation d'un système d'extension télescopique vertical. En outre, le silo de l'invention est mobile et peut donc se déplacer entre plusieurs sites de récolte.

De cette manière, il n'est plus nécessaire de disposer d'un trop grand nombre de sites de collecte sur un territoire donné. Car, le silo mobile selon l'invention peut se déplacer de site de collecte en site de collecte. En outre, le silo mobile de l'invention dispose d'une grande capacité pour récolter des produits agricoles de plusieurs sites, permettant ainsi l'optimisation de la chaine logistique globale. En effet, grâce à l'invention, les organismes collecteurs pourront réduire leurs couts de fonctionnement (c.-à-d., les couts d'infrastructure, les couts de personnel, les coûts de transports) tout en améliorant la productivité des fournisseurs de transport.

Ainsi, l'invention concerne un silo mobile agricole.

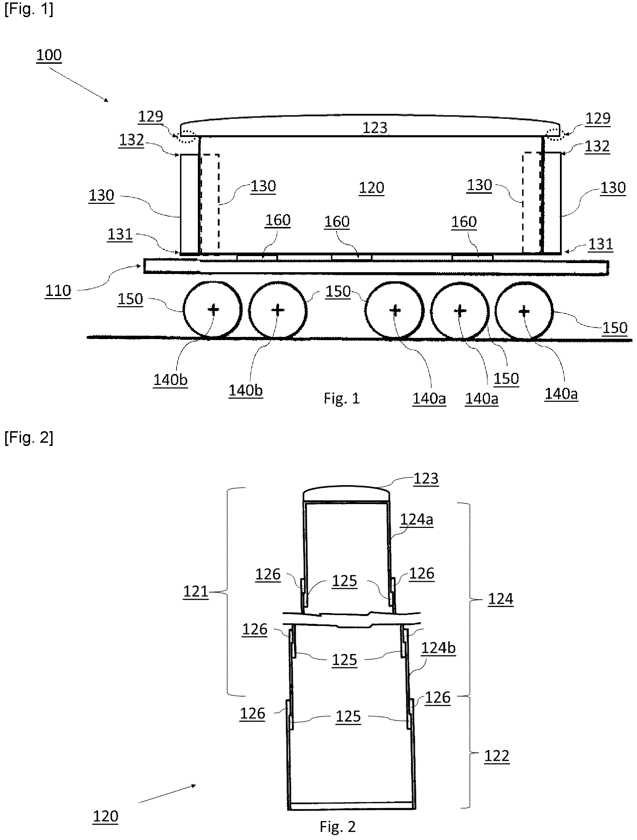

En particulier, comme illustré dans l'exemple de la figure 1, le silo mobile agricole 100 comprend un châssis 110, un conteneur de stockage 120 et un dispositif de levage 130.

Dans l'exemple de la figure 1, en considérant une orientation avant-arrière de droite à gauche, le châssis 110 s'étend longitudinalement vers l'avant et vers l'arrière.

De préférence, le châssis 110 présente une longueur inférieure à douze mètres, hors flèche d'attelage.

Dans une première façon de réaliser le châssis 110, celui-ci comprend au moins un essieu avant 140a et au moins un essieu arrière 140b.

En pratique, chaque essieu 140a, 140b supporte une pluralité de roues 150.

En outre, au moins l'un des essieux avant 140a est un essieu directeur, et au moins l'un des essieux arrière 140b est un essieu autovireur.

On entend par essieu directeur, un essieu porteur d'un véhicule dont les roues, qui sont reliées à la direction, sont montées sur des pièces qui peuvent pivoter autour d'axes portés par les extrémités de la poutre centrale de l'essieu. Par exemple, on peut utiliser une flèche d'attelage pour commander le changement d'orientation de roues.

On entend par essieu autovireur, un essieu auxiliaire d'un véhicule qui comporte une poutre centrale fixe toujours perpendiculaire au plan longitudinal du véhicule et dont les roues qui sont reliées à la direction, sont montées sur des pièces qui peuvent pivoter autour d'axes portés par les extrémités de la poutre centrale de l'essieu. Par exemple, on peut utiliser des mécanismes de commande connus (p. ex. systèmes de biellettes ou commande hydraulique) pour commander l'orientation de l'essieu directeur de manière à changer l'orientation des roues.

Dans un premier exemple de la façon première de réaliser le châssis 110, chaque essieu avant 140a est un essieu directeur.

Dans un deuxième exemple de la façon première de réaliser le châssis 110, chaque essieu arrière 140b est un essieu autovireur.

Dans une deuxième façon de réaliser le châssis 110, celui-ci est configuré pour supporter au moins un moteur du silo mobile agricole 100, par exemple un moteur thermique, un moteur électrique ou un moteur hybride.

On entend par moteur hybride, une installation motrice qui comprend au moins un moteur thermique et au moins un moteur électrique, et dans laquelle la puissance mécanique être fournie soit par le moteur thermique seul, soit par le moteur électrique seul, soit par les deux moteurs conjointement.

De préférence, on montera le moteur au niveau de la partie avant du châssis 110.

Toutefois, selon les besoins, on pourra monter le moteur ailleurs sur le châssis 110, et ce, sans nécessiter de modifications substantielles de l'invention.

En pratique, on pourra utiliser le moteur pour fournir de l'énergie pour faire fonctionner un ou plusieurs équipements annexes du silo mobile agricole 100.

Dans un exemple, les équipements annexes sont choisis parmi : une trémie de collecte et une vis transporteuse.

Ainsi, dans cet exemple, on pourra utiliser une trémie de collecte raccordée à une vis transporteuse d'entrée pour récolter des produits agricoles dans le conteneur de stockage 120.

De préférence, on montera la trémie de collecte sur le châssis 110, au niveau de sa partie arrière.

Toutefois, selon les besoins, on pourra monter la trémie de collecte ailleurs sur le châssis 110, et ce, sans nécessiter de modifications substantielles de l'invention.

De manière avantageuse, on pourra prévoir de monter la trémie de collecte sur le châssis 110 grâce à un moyen escamotable qui sera configuré pour rendre mobile la trémie de collecte entre une position rabattue et une position escamotée.

Par exemple, dans la position rabattue, la trémie de collecte pourra être sensiblement parallèle à l'une des parois du conteneur de stockage 120 ou sensiblement prendre appui contre l'une des parois du conteneur de stockage 120. Alors que, dans la position escamotée, la trémie de collecte pourra être sensiblement perpendiculaire à l'une des parois du conteneur de stockage 120.

Par ailleurs, on pourra utiliser une vis transporteuse de sortie pour extraire des produits agricoles hors du conteneur de stockage 120.

Toutefois, selon les ressources, on pourra envisager d'autres équipements annexes, et ce, sans nécessiter de modifications substantielles de l'invention.

De retour à la figure 1, le conteneur de stockage 120 est monté sur le châssis 110 entre l'avant et l'arrière du châssis 110.

Dans un exemple, le conteneur de stockage 120 est centré entre l'avant et l'arrière du châssis 110.

Toutefois, selon les besoins, on pourra envisager d'autres positions du conteneur de stockage 120, et ce, sans nécessiter de modifications substantielles de l'invention.

Dans un mode de réalisation particulier, le conteneur de stockage 120 présente une forme de parallélépipède.

De préférence, le conteneur de stockage 120 présente une forme de cube ou une forme de parallélépipède rectangle.

Dans ce cadre, le conteneur de stockage 120 comprend un plancher, un plafond, des parois latérales, dites paroi gauche et paroi droite, et des parois d'extrémité, dites paroi avant et paroi arrière.

Toutefois, selon les besoins, on pourra envisager d'autres formes du conteneur de stockage 120, et ce, sans nécessiter de modifications substantielles de l'invention.

Par ailleurs, comme l'illustre la figure 2, le conteneur de stockage 120 comprend une partie supérieure 121, une partie inférieure 122 qui délimitent une cavité interne creuse.

Dans l'invention, la cavité interne du conteneur de stockage 120 est configurée pour stocker des produits agricoles.

Dans un exemple, les produits agricoles se présentent sous forme de graines, par exemple de céréales, comme l'avoine, le blé, l'orge, le maïs, le soja et le riz.

Toutefois, selon les besoins, on pourra envisager d'utiliser d'autres produits agricoles qui pourront, le cas échéant, se présenter sous d'autres formes, et ce, sans nécessiter de modifications substantielles de l'invention.

De préférence, la cavité interne est configurée pour contenir jusqu'à 130 tonnes de produits agricoles.

Dans un mode de réalisation particulier de la partie inférieure 122, celle-ci présente au moins une ouverture d'extraction pour évacuer des produits agricoles hors de la cavité interne du conteneur de stockage 120.

En pratique, dans ce mode de réalisation de la partie inférieure 122, l'ouverture d'extraction est disposée sur au moins l'une des parois du conteneur de stockage 120.

Dans un exemple, on dispose l'ouverture d'extraction sur une paroi du conteneur de stockage 120 choisie parmi : la paroi arrière, la paroi avant, la paroi gauche et la paroi droite.

De retour à la figure 1, la partie supérieure 121 du conteneur de stockage 120 comprend un toit 123 et une partie télescopique 124.

En particulier, le toit 123 surmonte la partie télescopique 124.

Dans un mode de réalisation particulier, le toit 123 présente une forme de toiture choisie parmi : une toiture en berceau, une toiture en carène, une toiture à deux versants, une toiture en pavillon, une toiture mansardée, une toiture inversée, et de toutes combinaisons de celles-ci.

Par ailleurs, la partie télescopique 124 présente une périphérie extérieure qui est adaptée pour être logée dans la cavité interne du conteneur de stockage 120.

Dans une façon de réaliser la partie télescopique 124, celle-ci comprend au moins deux étages télescopiques 124a, 124b qui sont déplaçables verticalement.

En pratique, les deux étages télescopiques 124a, 124b présentent des périphéries extérieures de tailles différentes.

En particulier, un premier étage télescopique, dit étage télescopique de sommet 124a, est solidaire du toit 123.

En outre, un deuxième étage télescopique, dit étage télescopique de base 124b, est agencé de façon mobile par rapport à la partie inférieure 122 du conteneur de stockage 120.

Enfin, la partie télescopique 124 est agencée de manière qu'au moins deux étages télescopiques 124a, 124b voisins l'un de l'autre sont mobiles l'un par rapport à l'autre.

Dans un exemple de la façon de réaliser la partie télescopique 124, l'étage télescopique de sommet 124a présente un épaulement extérieur 125.

En outre, l'étage télescopique de base 124b et tout étage télescopique agencé entre l'étage télescopique de sommet 124a et l'étage télescopique de base 124b présentent un épaulement extérieur 125 et un épaulement intérieur 126.

Par ailleurs, la partie inférieure 122 présente un épaulement intérieur 126.

Enfin, chaque épaulement intérieur 126 est configuré pour pouvoir venir en butée avec l'épaulement extérieur 125 voisin.

Dans un premier mode de réalisation particulier de la partie télescopique 124, celle-ci comprend une pluralité de rails de guidage longitudinaux pour guider de manière coulissante chaque étage télescopique 124a, 124b.

Dans un exemple, on réalise le guidage de chaque étage télescopique 124a, 124b par des galets de guidage de type connus.

Toutefois, selon les ressources, on pourra envisager d'utiliser d'autres dispositifs de guidage, et ce, sans nécessiter de modifications substantielles de l'invention.

Dans un deuxième mode de réalisation de la partie télescopique 124, celle-ci présente au moins une ouverture de collecte pour récolter des produits agricoles dans la cavité interne du conteneur de stockage 120.

En pratique, dans ce mode de réalisation de la partie télescopique 124, l'ouverture de collecte est disposée sur au moins l'une des parois du conteneur de stockage 120.

Dans un exemple, on dispose l'ouverture de collecte sur une paroi du conteneur de stockage 120 choisie parmi : la paroi arrière, la paroi avant, la paroi gauche et la paroi droite.

De retour à l'exemple de la figure 1, une première extrémité fixe 131 du dispositif de levage 130 est solidaire de la partie inférieure 122 du conteneur de stockage 120.

Dans un premier exemple, on soude la première extrémité fixe 131 du dispositif de levage 130 à la partie inférieure 122 du conteneur de stockage 120.

Dans un deuxième exemple, on boulonne la première extrémité fixe 131 du dispositif de levage 130 à la partie inférieure 122 du conteneur de stockage 120.

En pratique, dans la figure 1, la première extrémité fixe 131 du dispositif de levage 130 est en outre fixée sur le plancher du conteneur de stockage 120.

Dans un premier exemple, la première extrémité fixe 131 du dispositif de levage 130 est en outre soudée au plancher du conteneur de stockage 120.

Dans un deuxième exemple, la première extrémité fixe 131 du dispositif de levage 130 est en outre boulonnée au plancher du conteneur de stockage 120.

Ainsi, dans l'exemple de la figure 1, le dispositif de levage n'est pas monté directement sur le châssis 110, mais fait partie intégrante du conteneur de stockage 120.

Un tel agencement est avantageux, car il permet d'interposer un système de balances, tels des pesons 160, entre le châssis 110 et le plancher du conteneur de stockage 120, pour peser la collecte et/ou l'extraction des produits agricoles qui sont introduits et/ou extraits du conteneur de stockage 120. De cette manière, on évite la génération d'interférences sur la pesée, car le dispositif de levage 130 fait partie de la tare du système de balance.

En outre, une deuxième extrémité mobile 132 du dispositif de levage 130 est solidaire de la partie supérieure 121 du conteneur de stockage 120.

Dans un premier exemple, on soude la deuxième extrémité mobile 132 du dispositif de levage 130 à la partie supérieure 121 du conteneur de stockage 120.

Dans un deuxième exemple, on boulonne la deuxième extrémité mobile 132 du dispositif de levage 130 à la partie supérieure 121 du conteneur de stockage 120.

Dans l'invention, le dispositif de levage 130 est configuré pour déplacer verticalement la partie supérieure 121 du conteneur de stockage 120 entre une configuration rétractée et une configuration déployée.

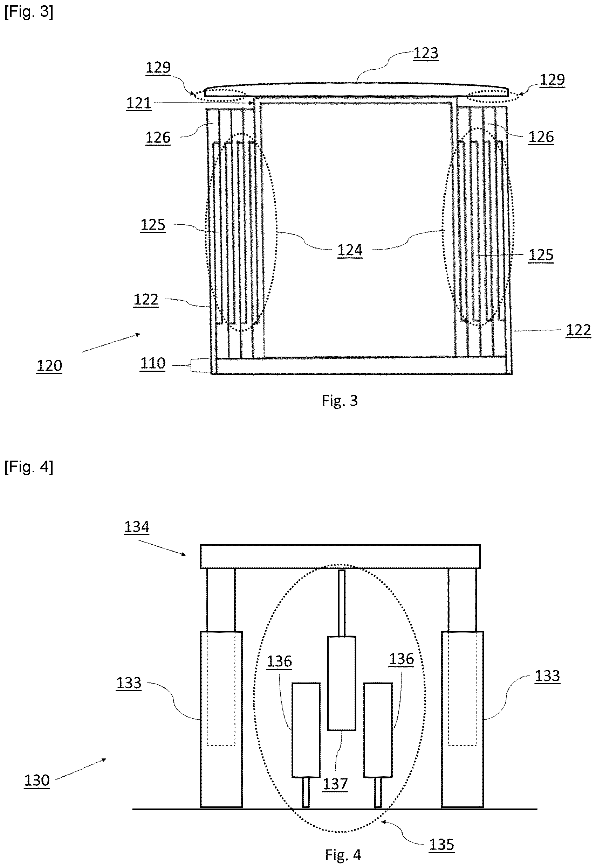

En pratique, comme illustré dans l'exemple de la figure 3 en combinaison avec la figure 2, la configuration rétractée autorise toute la partie télescopique 124 à être logée dans la cavité interne du conteneur de stockage 120.

Alors que, comme illustré dans l'exemple de la figure 2, la configuration déployée autorise tout ou partie de la partie télescopique 124 à s'étendre hors de la cavité interne du conteneur de stockage 120.

De préférence, dans la configuration déployée, le conteneur de stockage 120 présente une hauteur inférieure à dix mètres, de préférence inférieure à sept mètres, voire inférieure à cinq mètres.

Dans une façon de réaliser le dispositif de levage 130, comme illustré dans l'exemple de la figure 4, celui-ci comprend au moins une première paire opposée d'une première partie de dispositif de levage qui est disposée à l'extérieur du conteneur de stockage 120.

Dans un premier exemple, on dispose une première partie de dispositif de levage de la première paire sur la paroi arrière du conteneur de stockage 120 et on dispose l'autre première partie de dispositif de levage de la première paire sur la paroi avant du conteneur de stockage 120.

Dans un deuxième exemple, on dispose une première partie de dispositif de levage de la première paire sur la paroi gauche du conteneur de stockage 120 et on dispose l'autre première partie de dispositif de levage de la première paire sur la paroi droite du conteneur de stockage 120.

Toutefois, selon les besoins, on pourra disposer la première paire selon d'autres agencements, et ce, sans nécessiter de modifications substantielles de l'invention.

En pratique, chaque première partie de dispositif de levage comprend au moins deux montants verticaux 133 fixes, un cadre télescopique 134 et un mécanisme principal de levage 135.

Les montants verticaux 133 sont espacés transversalement l'un de l'autre, d'une distance prédéterminée.

Dans un exemple, la distance prédéterminée est choisie de sorte que les montants verticaux 133 se trouvent aux extrémités opposées de la paroi du conteneur de stockage 120 sur laquelle la première partie de dispositif de levage est disposée.

Le cadre télescopique 134 présente une section transversale en forme de U ou de C, qui est définie par deux branches verticales et une partie centrale.

Dans un exemple, le cadre télescopique 134 présente une section transversale en forme de V qui est définie par deux branches verticales qui se rejoignent en un point d'intersection. Dans ce cas, le point d'intersection est configuré pour réaliser les mêmes fonctions que la partie centrale, telles que présentées ci-après.

En pratique, les branches sont configurées pour coulisser à l'intérieur des montants verticaux 133.

Dans un exemple, on réalise le guidage de chaque branche par des galets de guidage de type connus.

Par ailleurs, le mécanisme principal de levage 135 est disposé entre la partie centrale du cadre télescopique 134 et les montants verticaux 133 de manière à pouvoir déplacer verticalement la partie centrale du cadre télescopique 134.

Dans un premier mode de réalisation particulier, le toit 123 comprend un rebord périphérique 129 dont au moins une partie est intégrale avec la partie centrale du cadre télescopique 134.

Dans un deuxième mode de réalisation particulier, le toit 123 comprend un rebord périphérique 129 dont au moins une partie est solidaire de la partie centrale du cadre télescopique 134.

En outre, dans la façon de réaliser le dispositif de levage 130, celui-ci comprend au moins une deuxième paire opposée d'une deuxième partie de dispositif de levage qui est disposée à l'intérieur du conteneur de stockage 120.

Dans un premier exemple, on dispose une deuxième partie de dispositif de levage de la deuxième paire sur la paroi arrière du conteneur de stockage 120 et on dispose l'autre deuxième partie de dispositif de levage de la deuxième paire sur la paroi avant du conteneur de stockage 120.

Dans un deuxième exemple, on dispose une deuxième partie de dispositif de levage de la deuxième paire sur la paroi gauche du conteneur de stockage 120 et on dispose l'autre deuxième partie de dispositif de levage de la deuxième paire sur la paroi droite du conteneur de stockage 120.

Toutefois, selon les besoins, on pourra disposer la deuxième paire selon d'autres agencements, et ce, sans nécessiter de modifications substantielles de l'invention.

Par exemple, on pourra disposer la deuxième partie de dispositif de levage de la deuxième paire à distance des parois du conteneur de stockage 120.

En pratique, chaque deuxième partie de dispositif de levage comprend un mécanisme auxiliaire de levage qui est couplé au mécanisme principal de levage 135 et qui est configuré pour assister, de manière synchronisée, le mécanisme principal de levage 135 dans le maintien de la partie centrale du cadre télescopique 134.

Dans un premier exemple de la façon de réaliser le dispositif de levage 130, au moins l'un des mécanismes principaux de levage 135 et/ou au moins l'un des mécanismes auxiliaires de levage comprennent un premier groupe 136 de vérins de levage et au moins un deuxième groupe 137 de vérins de levage.

En particulier, chaque groupe de vérins de levage comprend au moins un vérin de levage.

Dans un premier exemple relatif au mécanisme principal de levage 135, le vérin de levage est un vérin hydraulique.

Cet agencement est avantageux, car les vérins hydrauliques sont puissants, résistants, facilement contrôlables et très précis.

Dans un deuxième exemple relatif au mécanisme auxiliaire de levage, le vérin de levage est un vérin pneumatique.

Cet agencement est avantageux, car les vérins pneumatiques ne contiennent que de l'air, qui même s'il fuit n'aura pas d'impact sur les produits agricoles présents dans la cavité interne du conteneur de stockage 120. Alors qu'au contraire, une fuite d'huile d'un vérin hydraulique serait dangereuse sur plan alimentaire si elle rentre en contact avec les produits agricoles présents dans la cavité interne du conteneur de stockage 120.

Par ailleurs, le premier groupe 136 de vérins de levage et le deuxième groupe 137 de vérins de levage sont configurés pour agir en sens inverse l'un par rapport à l'autre, dite configuration de vérins inversés.

Un tel agencement est avantageux, car il permet de réaliser un maintien en douceur et par paliers.

En pratique, un ou plusieurs vérins primaires réalisent le maintien jusqu'à atteindre un premier palier qui correspond à une position de fin de course des vérins primaires. Ensuite, un ou plusieurs vérins secondaires continue le maintien jusqu'à atteindre un deuxième palier qui correspond à une position de fin de course des vérins secondaires.

Bien sûr, l'invention couvre la mise en œuvre de configurations de vérins inversés avec plus de deux paliers.

Dans un premier exemple, la configuration de vérins inversés comprend un premier vérin et un deuxième vérin.

De préférence, le corps de vérin du premier vérin et le corps de vérin du deuxième vérin présentent la même longueur.

Toutefois, selon les besoins, on pourra choisir des corps de vérins de longueur différente, et ce, sans nécessiter de modifications substantielles de l'invention.

En pratique, dans ce premier exemple, la tige du premier vérin est orientée dans une première direction, tandis que la tige du deuxième vérin est orientée dans une deuxième direction qui est opposée à la première direction.

Dans un deuxième exemple, la configuration de vérins inversés comprend un premier vérin, un deuxième vérin et un troisième vérin.

De préférence, le corps de vérin du premier vérin, le corps de vérin du deuxième vérin, et le corps de vérin du deuxième vérin présentent la même longueur.

Toutefois, selon les besoins, on pourra choisir des corps de vérins de longueur différente, et ce, sans nécessiter de modifications substantielles de l'invention.

Par exemple, on pourra choisir des corps de vérin d'une première longueur pour le premier vérin et le deuxième vérin, tandis que l'on choisira un corps de vérin d'une deuxième longueur, différente de la première longueur, pour le troisième vérin.

En pratique, dans ce deuxième exemple, la tige du premier vérin et la tige du deuxième vérin sont orientées dans une première direction, tandis que la tige du troisième vérin est orientée dans une deuxième direction qui est opposée à la première direction.

Bien sûr, selon les besoins, on pourra envisager d'autres configurations de vérins inversés.

Dans un deuxième exemple de la façon de réaliser le dispositif de levage 130, au moins l'un des mécanismes principaux de levage 135 et/ou au moins l'un des mécanismes auxiliaires de levage comprennent, en outre, un mécanisme de maintien à cliquets de type connu.

Dans ce deuxième exemple de la façon de réaliser le dispositif de levage 130, la paroi du conteneur de stockage 120 sur laquelle est disposée la première partie de dispositif de levage ou la deuxième partie de dispositif de levage comprend une pluralité d'encliquetages qui sont disposés successivement sur une partie substantielle de la hauteur de la paroi.

En outre, les encliquetages sont configurés pour coopérer avec les cliquets de maintien du mécanisme de maintien à cliquets.

En pratique, les cliquets de maintien sont configurés pour être en prise avec les encliquetages ou être libérés des encliquetages. Pour cela, tout ou partie des cliquets de maintien sont mobiles.

Ainsi, l'invention couvre également une configuration qui comprend au moins un cliquet de maintien fixe et au moins un cliquet de maintien mobile.

Par ailleurs, les cliquets de maintien sont montés pivotant pour basculer entre une position de prise et une position de libération.

Par exemple, les cliquets de maintien présentent une partie d'extrémité dont la forme est complémentaire de la forme de l'espace délimité entre deux encliquetages successifs.

Ainsi, lorsqu'au moins l'un des mécanismes principaux de levage 135 et/ou au moins l'un des mécanismes auxiliaires de levage réalisent le déplacement vertical de la partie centrale du cadre télescopique 134, le mécanisme de maintien à cliquets permet de maintenir le dispositif de levage 130 à une hauteur souhaitée.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures annexées.

L'invention peut faire l'objet de nombreuses variantes et applications autres que celles décrites ci-dessus.

## Revendications

1. Silo mobile agricole (100) comprenant :
- un châssis de véhicule (110) qui est adapté pour circuler au-dessus du sol, le châssis s'étendant longitudinalement vers l'avant et vers l'arrière,
- un conteneur de stockage (120) qui est monté sur le châssis de véhicule (110) entre l'avant et l'arrière du châssis de véhicule (110) et qui comprend une partie supérieure (121), une partie inférieure (122) qui délimitent une seule cavité interne creuse, la cavité interne étant configurée pour stocker des produits agricoles sous forme de graines, et
- un dispositif de levage (130) dont une première extrémité fixe (131) est solidaire de la partie inférieure (122) du conteneur de stockage (120) et une deuxième extrémité mobile (132) est solidaire de la partie supérieure (121) du conteneur de stockage (120), le silo mobile agricole (100) étant **caractérisé en ce que**
- la partie supérieure (121) du conteneur de stockage (120) comprend un toit (123) et une partie télescopique (124) qui est surmontée par le toit (123), la partie télescopique (124) présentant une périphérie extérieure qui est adaptée pour être logée dans la cavité interne, et
- le dispositif de levage (130) est configuré pour déplacer verticalement la partie supérieure (121) du conteneur de stockage (120) entre une configuration rétractée dans laquelle le conteneur de stockage (120) présente une première capacité et une configuration déployée dans laquelle le conteneur de stockage (120) présente une deuxième capacité supérieure à la première capacité, la configuration rétractée autorisant toute la partie télescopique (124) à être logée dans la cavité interne, la configuration déployée autorisant tout ou partie de la partie télescopique (124) à s'étendre hors de la cavité interne et à partir de celle-ci.

2. Silo mobile agricole (100) selon la revendication 1, dans lequel la partie télescopique (124) comprend au moins deux étages télescopiques (124a, 124b) qui sont déplaçables verticalement,
dans lequel,
un premier étage télescopique, dit étage télescopique de sommet (124a), est solidaire du toit (123), et
un deuxième étage télescopique, dit étage télescopique de base (124b), est agencé de façon mobile par rapport à la partie inférieure (122) du conteneur de stockage (120),
et dans lequel, au moins deux étages télescopiques (124a, 124b) voisins l'un de l'autre sont agencés de façon mobile l'un par rapport à l'autre.

3. Silo mobile agricole (100) selon la revendication 2, dans lequel l'étage télescopique de sommet (124a) présente un épaulement extérieur (125), l'étage télescopique de base (124b) et tout étage télescopique agencé entre l'étage télescopique de sommet (124a) et l'étage télescopique de base (124b) présentent un épaulement extérieur (125) et un épaulement intérieur (126), et la partie inférieure (122) présente un épaulement intérieur (126),
et dans lequel, chaque épaulement intérieur (126) est configuré pour pouvoir venir en butée avec l'épaulement extérieur (125) voisin.

4. Silo mobile agricole (100) selon l'une quelconque des revendications 1 à 3, dans lequel la partie télescopique (124) du conteneur de stockage (120) présente au moins une ouverture de collecte pour permettre l'introduction des produits agricoles dans la cavité interne et au moins une ouverture d'extraction pour permettre l'extraction des produits agricoles hors de la cavité interne, l'ouverture de collecte et l'ouverture d'extraction étant distinctes l'une de l'autre et disposées respectivement sur des parois latérales opposées du conteneur de stockage (120), de préférence à l'avant et à l'arrière.

5. Silo mobile agricole (100) selon l'une quelconque des revendications 1 à 4, dans lequel le dispositif de levage (130) comprend au moins une première paire opposée d'une première partie de dispositif de levage qui est disposée à l'extérieur du conteneur de stockage (120), chaque première partie de dispositif de levage comprenant au moins deux montants verticaux (133) fixes, un cadre télescopique (134) et un mécanisme principal de levage (135), les montants verticaux (133) étant espacés transversalement l'un de l'autre, le cadre télescopique (134) présentant une section transversale en forme de U ou de C qui est définie par deux branches et une partie centrale, les branches étant configurées pour coulisser à l'intérieur des montants verticaux (133), et le mécanisme principal de levage (135) étant disposé entre la partie centrale du cadre télescopique (134) et les montants verticaux (133) de manière à pouvoir déplacer verticalement la partie centrale du cadre télescopique (134).

6. Silo mobile agricole (100) selon la revendication 5, dans lequel le dispositif de levage (130) comprend au moins une deuxième paire opposée d'une deuxième partie de dispositif de levage qui est disposée à l'intérieur du conteneur de stockage (120), chaque deuxième partie de dispositif de levage comprenant un mécanisme auxiliaire de levage qui est couplé au mécanisme principal de levage (135) et qui est configuré pour assister, de manière synchronisée, le mécanisme principal de levage (135) dans le maintien de la partie centrale du cadre télescopique (134).

7. Silo mobile agricole (100) selon l'une quelconque des revendications 5 à 6, dans lequel au moins l'un des mécanismes principaux de levage (135) et/ou au moins l'un des mécanismes auxiliaires de levage comprend un premier groupe (136) de vérins de levage et au moins un deuxième groupe (137) de vérins de levage, chaque groupe de vérins de levage comprenant au moins un vérin de levage, le premier groupe (136) de vérins de levage et le deuxième groupe (137) de vérins de levage étant configurés pour agir en sens inverse l'un par rapport à l'autre.

8. Silo mobile agricole (100) selon l'une quelconque des revendications 6 à 7, dans lequel au moins l'un des mécanismes principaux de levage (135) et/ou au moins l'un des mécanismes auxiliaires de levage comprennent un mécanisme de maintien à cliquets.

9. Silo mobile agricole (100) selon l'une quelconque des revendications 5 à 8, dans lequel le toit (123) comprend un rebord périphérique (129) dont au moins une partie est intégrale avec la partie centrale du cadre télescopique (134) ou est solidaire de la partie centrale du cadre télescopique (134).

10. Silo mobile agricole (100) selon l'une quelconque des revendications 1 à 9, dans lequel le châssis de véhicule (110) comprend au moins un essieu avant (140a) et au moins un essieu arrière (140b), chaque essieu (140a, 140b) supportant une pluralité de roues (150) et dans lequel au moins l'un des essieux avant (140a) est un essieu directeur, et au moins l'un des essieux arrière (140b) est un essieu autovireur.

## Patentansprüche

1. Mobiles landwirtschaftliches Silo (100), umfassend:
- einen Fahrzeugrahmen (110), der geeignet ist, auf dem Boden zu fahren, wobei sich der Rahmen in Längsrichtung nach vorne und nach hinten erstreckt,
- einen Lagerbehälter (120), der auf dem Fahrzeugrahmen (110) zwischen der Front und dem Heck des Fahrzeugrahmens (110) angebracht ist und einen oberen Teil (121), einen unteren Teil (122) umfasst, die einen einzelnen hohlen inneren Hohlraum begrenzen, wobei der innere Hohlraum ausgelegt ist, um landwirtschaftliche Produkte in Form von Körnern zu lagern, und
- eine Hebevorrichtung (130), von der ein erstes festes Ende (131) fest mit dem unteren Teil (122) des Lagerbehälters (120) verbunden ist und ein zweites bewegliches Ende (132) fest mit dem oberen Teil (121) des Lagerbehälters (120) verbunden ist,
wobei das fahrbare landwirtschaftliche Silo (100) **dadurch gekennzeichnet ist, dass**
- der obere Teil (121) des Lagerbehälters (120) ein Dach (123) und einen teleskopischen Teil (124) umfasst, der von dem Dach (123) überragt wird, wobei der teleskopische Teil (124) einen Außenumfang aufweist, der geeignet ist, um in dem inneren Hohlraum aufgenommen zu sein, und
- die Hebevorrichtung (130) ausgelegt ist, um den oberen Teil (121) des Lagerbehälters (120) zwischen einer eingezogenen Konfiguration, in der der Lagerbehälter (120) eine erste Kapazität aufweist, und einer ausgefahrenen Konfiguration, in der der Lagerbehälter (120) eine zweite Kapazität aufweist, die größer als die erste Kapazität ist, vertikal zu verlagern, wobei es die eingefahrene Konfiguration erlaubt, dass der gesamte teleskopische Teil (124) in dem inneren Hohlraum untergebracht ist, und es die ausgefahrene Konfiguration erlaubt, dass sich der gesamte oder ein Teil des teleskopischen Teils (124) aus dem inneren Hohlraum heraus und ab diesem erstreckt.

2. Mobiles landwirtschaftliches Silo (100) nach Anspruch 1, wobei der teleskopische Teil (124) mindestens zwei Teleskopstufen (124a, 124b) umfasst, die vertikal verlagerbar sind,
wobei,
eine erste Teleskopstufe, bezeichnet als Spitzen-Teleskopstufe (124a), fest mit dem Dach (123) verbunden ist, und
eine zweite Teleskopstufe, bezeichnet als Basis-Teleskopstufe (124b), relativ zum unteren Teil (122) des Lagerbehälters (120) beweglich eingerichtet ist,
und wobei mindestens zwei einander benachbarte Teleskopstufen (124a, 124b) zueinander beweglich angeordnet sind.

3. Mobiles landwirtschaftliches Silo (100) nach Anspruch 2, wobei die Spitzen-Teleskopstufe (124a) eine Außenschulter (125) aufweist, die Basis-Teleskopstufe (124b) und jede zwischen der Spitzen-Teleskopstufe (124a) und der Basis-Teleskopstufe (124b) angeordnete Teleskopstufe eine Außenschulter (125) und eine Innenschulter (126) aufweist, und der untere Teil (122) eine Innenschulter (126) aufweist,
und wobei jede Innenschulter (126) ausgelegt ist, um an der benachbarten Außenschulter (125) anstoßen zu können.

4. Mobiles landwirtschaftliches Silo (100) nach einem der Ansprüche 1 bis 3, wobei der Teleskopteil (124) des Lagerbehälters (120) mindestens eine Sammelöffnung aufweist, um das Einbringen der landwirtschaftlichen Produkte in den inneren Hohlraum zu ermöglichen, und mindestens eine Entnahmeöffnung, um das Entnehmen der landwirtschaftlichen Produkte aus dem inneren Hohlraum zu ermöglichen, wobei die Sammelöffnung und die Entnahmeöffnung voneinander verschieden sind und jeweils an gegenüberliegenden Seitenwänden des Lagerbehälters (120), vorzugsweise an der Front und am Heck, angeordnet sind.

5. Mobiles landwirtschaftliches Silo (100) nach einem der Ansprüche 1 bis 4, wobei die Hebevorrichtung (130) mindestens ein erstes Paar umfasst, das einem ersten Teil der Hebevorrichtung gegenüberliegt, das außerhalb des Lagerbehälters (120) angeordnet ist, wobei jeder erste Teil der Hebevorrichtung mindestens zwei feste vertikale Stützen (133), einen Teleskoprahmen (134) und einen Haupthebemechanismus (135) umfasst, wobei die vertikalen Stützen (133) in Querrichtung voneinander beabstandet sind, wobei der Teleskoprahmen (134) einen U- oder C-förmigen Querschnitt aufweist, der durch zwei Schenkel und einen Mittelteil definiert ist, wobei die Schenkel ausgelegt sind, um innerhalb der vertikalen Stützen (133) zu gleiten, und wobei der Haupthebemechanismus (135) zwischen dem Mittelteil des Teleskoprahmens (134) und den vertikalen Stützen (133) derart angeordnet ist, dass er den Mittelteil des Teleskoprahmens (134) vertikal verlagern kann.

6. Mobiles landwirtschaftliches Silo (100) nach Anspruch 5, wobei die Hebevorrichtung (130) mindestens ein zweites Paar umfasst, das einem zweiten Teil der Hebevorrichtung gegenüberliegt, das innerhalb des Lagerbehälters (120) angeordnet ist, wobei jeder zweite Teil der Hebevorrichtung einen Hilfshebemechanismus umfasst, der mit dem Haupthebemechanismus (135) gekoppelt ist und der ausgelegt ist, um den Haupthebemechanismus (135) synchron beim Halten des Mittelteils des Teleskoprahmens (134) zu unterstützen.

7. Mobiles landwirtschaftliches Silo (100) nach einem der Ansprüche 5 bis 6, wobei mindestens einer der Haupthebemechanismen (135) und/oder mindestens einer der Hilfshebemechanismen eine erste Gruppe (136) von Hebezylindern und mindestens eine zweite Gruppe (137) von Hebezylindern umfasst, wobei jede Gruppe von Hebezylindern mindestens einen Hebezylinder umfasst, wobei die erste Gruppe (136) von Hebezylindern und die zweite Gruppe (137) von Hebezylindern ausgelegt sind, um relativ zueinander in entgegengesetzter Richtung zu wirken.

8. Mobiles landwirtschaftliches Silo (100) nach einem der Ansprüche 6 bis 7, wobei mindestens einer der Haupthebemechanismen (135) und/oder mindestens einer der Hilfshebemechanismen einen Rastenhaltemechanismus umfasst.

9. Mobiles landwirtschaftliches Silo (100) nach einem der Ansprüche 5 bis 8, wobei das Dach (123) eine Umfangskante (129) aufweist, von der mindestens ein Teil integral mit dem Mittelteil des Teleskoprahmens (134) ist oder fest mit dem Mittelteil des Teleskoprahmens (134) verbunden ist.

10. Mobiles landwirtschaftliches Silo (100) nach einem der Ansprüche 1 bis 9, wobei der Fahrzeugrahmen (110) mindestens eine Vorderachse (140a) und mindestens eine Hinterachse (140b) umfasst, wobei jede Achse (140a, 140b) eine Vielzahl von Rädern (150) trägt und wobei mindestens eine der Vorderachsen (140a) eine Lenkachse ist und mindestens eine der Hinterachsen (140b) eine selbstlenkende Achse ist.

## Claims

1. An agricultural mobile silo (100) comprising:
- a vehicle chassis (110) which is adapted to travel above the ground, the chassis extending longitudinally forward and rearward,
- a storage container (120) which is mounted on the vehicle chassis (110) between the front and the rear of the vehicle chassis (110) and which comprises an upper portion (121), a lower portion (122) which delimit a single hollow inner cavity, the inner cavity being configured to store agricultural products in the form of seeds, and
- a lifting device (130) having a first fixed end (131) secured to the lower portion (122) of the storage container (120) and a second movable end (132) secured to the upper portion (121) of the storage container (120),
the agricultural mobile silo (100) being **characterized in that**:
- the upper portion (121) of the storage container (120) comprises a roof (123) and a telescopic portion (124) which is surmounted by the roof (123), the telescopic portion (124) having an external periphery which is adapted to be housed in the inner cavity, and
- the lifting device (130) is configured to vertically move the upper portion (121) of the storage container (120) between a retracted configuration in which the storage container (120) has a first capacity and a deployed configuration in which the storage container (120) has a second capacity greater than the first capacity, the retracted configuration allowing the entire telescopic portion (124) to be housed in the inner cavity, the deployed configuration allowing all or part of the telescopic portion (124) to extend out of and from the inner cavity.

2. The agricultural mobile silo (100) according to claim 1, wherein the telescopic portion (124) comprises at least two telescopic stages (124a, 124b) which are vertically movable,
wherein,
a first telescopic stage, called top telescopic stage (124a), is secured to the roof (123), and
a second telescopic stage, called base telescopic stage (124b), is movably arranged relative to the lower portion (122) of the storage container (120),
and wherein at least two telescopic stages (124a, 124b) adjacent to each other are arranged so as to be movable relative to each other.

3. The agricultural mobile silo (100) according to claim 2, wherein the top telescopic stage (124a) has an external shoulder (125), the base telescopic stage (124b) and any telescopic stage arranged between the top telescopic stage (124a) and the base telescopic stage (124b) have an external shoulder (125) and an internal shoulder (126), and the lower portion (122) has an internal shoulder (126),
and wherein each internal shoulder (126) is configured to be able to come into abutment with the neighboring external shoulder (125).

4. The agricultural mobile silo (100) according to any one of claims 1 to 3, wherein the telescopic portion (124) of the storage container (120) has at least one collection opening to allow the introduction of the agricultural products into the inner cavity and at least one extraction opening to allow the extraction of the agricultural products out of the inner cavity, the collection opening and the extraction opening being distinct from each other and disposed respectively on opposite lateral walls of the storage container (120), preferably at the front and at the rear.

5. The agricultural mobile silo (100) according to any one of claims 1 to 4, wherein the lifting device (130) comprises at least a first opposite pair of a first lifting device portion which is disposed outside the storage container (120), each first lifting device portion comprising at least two fixed vertical uprights (133), a telescopic frame (134) and a main lifting mechanism (135), the vertical uprights (133) being transversely spaced from each other, the telescopic frame (134) having a U-shaped or C-shaped cross-section which is defined by two legs and a central portion, the legs being configured to slide inside the vertical uprights (133), and the main lifting mechanism (135) being disposed between the central portion of the telescopic frame (134) and the vertical uprights (133) so as to be able to vertically move the central portion of the telescopic frame (134).

6. The agricultural mobile silo (100) according to claim 5, wherein the lifting device (130) comprises at least a second opposite pair of a second lifting device portion which is disposed inside the storage container (120), each second lifting device portion comprising an auxiliary lifting mechanism which is coupled to the main lifting mechanism (135) and which is configured to assist, in a synchronous manner, the main lifting mechanism (135) in holding the central portion of the telescopic frame (134).

7. The agricultural mobile silo (100) according to any one of claims 5 to 6, wherein at least one of the main lifting mechanisms (135) and/or at least one of the auxiliary lifting mechanisms comprises a first group (136) of lifting jacks and at least a second group (137) of lifting jacks, each group of lifting jacks comprising at least one lifting jack, the first group (136) of lifting jacks and the second group (137) of lifting jacks being configured to act in opposite directions relative to each other.

8. The agricultural mobile silo (100) according to any one of claims 6 to 7, wherein at least one of the main lifting mechanisms (135) and/or at least one of the auxiliary lifting mechanisms comprise a ratchet holding mechanism.

9. The agricultural mobile silo (100) according to any one of claims 5 to 8, wherein the roof (123) comprises a peripheral rim (129) at least part of which is integral with the central portion of the telescopic frame (134) or is secured to the central portion of the telescopic frame (134).

10. The agricultural mobile silo (100) according to any one of claims 1 to 9, wherein the vehicle chassis (110) comprises at least one front axle (140a) and at least one rear axle (140b), each axle (140a, 140b) supporting a plurality of wheels (150) and wherein at least one of the front axles (140a) is a steering axle, and at least one of the rear axles (140b) is a self-steering axle.
